(19) Europäisches Patentamt European Patent Office Office européen des brevets

(11) **EP 3 671 169 B1**

(12) **EUROPEAN PATENT SPECIFICATION**

(45) Date of publication and mention of the grant of the patent:
**19.10.2022 Bulletin 2022/42**

(21) Application number: **19218541.1**

(22) Date of filing: **20.12.2019**

(51) International Patent Classification (IPC):
**G01N 3/28** *(2006.01)*      **G01N 3/26** *(2006.01)*
**G01M 5/00** *(2006.01)*

(52) Cooperative Patent Classification (CPC):
**G01M 5/0033; G01M 5/0075; G01N 3/26; G01N 3/28**

(54) **METHOD FOR DETERMINING DEFORMATION CAUSING FAILURE OF DUCTILE STRUCTURAL MATERIAL SUBJECTED TO VARIOUS STRESS STATES AND TEMPERATURES**

VERFAHREN ZUR BESTIMMUNG DER VERFORMUNG, DIE EINEN AUSFALL VON DUKTILEM STRUKTURMATERIAL VERURSACHT, DAS VERSCHIEDENEN BELASTUNGSZUSTÄNDEN UND TEMPERATUREN AUSGESETZT IST

PROCÉDÉ PERMETTANT DE DÉTERMINER UNE DÉFORMATION PROVOQUANT LA DÉFAILLANCE D'UN MATÉRIAU STRUCTURAL DUCTILE SOUMIS À DIFFÉRENTS ÉTATS DE CONTRAINTE ET DIVERSES TEMPÉRATURES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.12.2018 PL 42830418**

(43) Date of publication of application:
**24.06.2020 Bulletin 2020/26**

(73) Proprietor: **SIEC BADAWCZA LUKASIEWICZ-INSTYTUT LOTNICTWA 02-256 Warszawa (PL)**

(72) Inventor: **SOCHA, Grzegorz Warszawa (PL)**

(74) Representative: **Holyst, Anna et al Polservice Kancelaria Rzecznikow Patentowych Sp. z o.o. ul. Bluszczanska 73 00-712 Warszawa (PL)**

(56) References cited:
CN-B- 105 372 125      JP-A- 2000 234 991
KR-A- 20040 059 949     US-A1- 2011 005 331

- HANCOCK J W ET AL: "On the mechanisms of ductile failure in high-strength steels subjected to multi-axial stress-states", JOURNAL OF THE MECHANICS AND PHYSICS OF SOLIDS, PERGAMON PRESS, OXFORD, GB, vol. 24, no. 2-3, 1 June 1976 (1976-06-01), pages 147-160, XP024458857, ISSN: 0022-5096, DOI: 10.1016/0022-5096(76)90024-7 [retrieved on 1976-06-01]
- FALESKOG JONAS ET AL: "Tension-torsion fracture experiments-Part I: Experiments and a procedure to evaluate the equivalent plasti", INTERNATIONAL JOURNAL OF SOLIDS AND STRUCTURES, NEW YORK, NY, US, vol. 50, no. 25, 4 September 2013 (2013-09-04), pages 4241-4257, XP028735940, ISSN: 0020-7683, DOI: 10.1016/J.IJSOLSTR.2013.08.029

## Description

## Technical Field

The invention relates to a method and assembly for determining deformation causing failure of a ductile structural material subjected to various stress states and temperatures.

## Background Art

A criterion of material failure is commonly used in strength calculations, which are performed, for example, by the Finite Element Method (FEM), for contemporary engineering structures (planes, cars and others). At present, all structural calculations are performed by means of computer software packages in which several criteria of material failure are typically implemented. It is usually a problem to determine coefficients related to such criteria (calibration) for given material and temperature.

Determining a criterion of failure is particularly difficult in the case of elastic-plastic (ductile) materials that do not follow Hook's law. One of the criteria used for such materials is strain criterion.

Thus, the ability of elastic-plastic materials, such as metal alloys, to reach permanent deformation is a very important property considering the process of forming and application of constructional elements. This ability is dependent on the state of stress in which a material is subjected to permanent deformation.

The prior art discloses criteria for determining the failure moment in elastic-plastic materials, which can be divided into stress and strain criteria. Due to changes in the state of stress caused by the localization of deformation, strain criteria are more widely used.

According to a generally accepted theory, the ability of given material to reach states of permanent deformation, measured by the value of limit failure strain $\varepsilon^f$, corresponding to failure of the material, is determined by the so called triaxial stress coefficient $\eta$. This coefficient is defined as follows:

$$\eta = \frac{\sigma_m}{\sigma_{HM}} \qquad (1)$$

wherein $\sigma_m$ stands for stress that is an averaged value of three normal components of the stress tensor in the principal stress coordinate system:

$$\sigma_m = \frac{\sigma_1 + \sigma_2 + \sigma_3}{3} \qquad (2)$$

and $\sigma_{HM}$ stands for plastic flow stress, also called the Huber-Mises stress, in the principal stress coordinate system defined by the formula:

$$\sigma_{HM} = \sqrt{\frac{1}{2}[(\sigma_1 - \sigma_2)^2 + (\sigma_2 - \sigma_3)^2 + (\sigma_3 - \sigma_1)^2]} \qquad (3)$$

Dependence between limit failure strain $\varepsilon^f$ in the general case of strain state, calculated as equivalent strain which is an invariant of strain tensor:

$$\varepsilon^f = \frac{\sqrt{2}}{3}\sqrt{(\varepsilon_1 - \varepsilon_2)^2 + (\varepsilon_2 - \varepsilon_3)^2 + (\varepsilon_3 - \varepsilon_1)^2 + \frac{3}{2}(\gamma_{12}^2 + \gamma_{23}^2 + \gamma_{31}^2)} \qquad (4)$$

wherein on the right side are all components of the plastic strain tensor, wherein $\varepsilon_1$, $\varepsilon_2$, $\varepsilon_3$ stand for linear strain, and $\gamma_{12}$, $\gamma_{23}$, $\gamma_{13}$ stand for angle of shear, has been proposed in various forms by many researchers.

One proposal of an equation that provides a good description of experimental data was published in the following work: Hancock J. W. and Mackenzie A. C., "On the mechanism of ductile failure in high-strength steels subjected to multi-axial stress states", J. Mech. Phys. Sol., (1976), 147-175, namely:

$$\varepsilon^f = ae^{-\frac{3}{2}\eta} \qquad (5)$$

Determination of coefficient $a$, which is included in the above equation (5), makes it possible to univocally determine limit failure strain $\varepsilon^f$ of ductile materials for all stress states.

Coefficient $a$ in the equation (5) is a coefficient which is dependent on temperature and which fully characterizes the ability of a material to reach limit strains causing material failure in all stresses states at given temperature.

As results from equation (5), in order to determine the value of coefficient $a$ it is necessary to cause destruction of a material at a specific constant stress state (at constant value of coefficient $\eta$).

The prior art discloses methods for determining coefficient $a$ for elastic-plastic materials which are based, among others, on a static tensile test carried out in a metal specimen until failure. It should be noted, however, that this approach does not fulfill the requirement for maintaining a constant stress state (constant coefficient $\eta$) during the entire process, until failure. It is due to localization of deformation in the form of a narrowing in the measured part of a specimen, which leads to triaxial tensile stress. Results obtained in this way do not fully reflect the real properties of the tested material and the method of obtaining them is even at variance with the present state of the art. Nevertheless, the results of such tests are commonly used because in order to obtain accurate results it is necessary to construct full-scale mathematical models or solve complicated sets of equations, which is very laborious and entails considerable costs and high level of complexity.

Moreover, the methods known in the prior art require the use of specialized testing machines enabling one to carry out experiments in strictly controlled conditions (e.g. due to complicated grip systems).

In the case of a torsion test, the frequently used prior-art specimens are thin-walled axisymmetric specimens for which almost constant axial stress distribution in radial direction of the specimen may be assumed, which is required to determine selected material properties (for example, yield stress). However, the cost of producing such a hollow specimen is higher than e.g. the cost of producing a solid specimen and it involves a greater amount of labour.

One know and hitherto used method for determining limit failure strain of ductile structural materials has been described, for example, in the following work: Wierzbicki T., Bao Y., Lee Y. W., Bai Y., "Calibration and evaluation of seven fracture models", International Journal of Mechanical Sciences, 47 (2005), pp.719-743.

Other prior art is disclosed in JP 2000 234991 and FALESKOG JONAS ET AL: "Tension-torsion fracture experiments-Part I: Experiments and a procedure to evaluate the equivalent plastic strain",INTERNATIONAL JOURNAL OF SOLIDS AND STRUCTURES, NEW YORK, NY, US, vol. 50, no. 25, 4 September 2013 (2013-09-04), pages 4241-4257, ISSN: 0020-7683, DOI: 10.1016/J.IJSOLSTR.2013.08.029.

**Summary of Invention**

The purpose of the invention is to develop a method for determining deformation causing failure $\varepsilon^f$ of a ductile structural material in various stress states and temperatures, which will reflect real properties of a material, which will be simple and will be characterized by a low cost of production and calibration.

Another purpose of the invention is to develop a method which will enable determining the value of $\varepsilon^f$ for both positive and negative temperature.

The present invention is based on the thesis that pure shear along the surface of a cylindrical specimen being twisted is the easiest state of stress which can be obtained and maintained from the beginning to the end of a deformation process. For this kind of load state $\sigma_m = 0$, $\eta = 0$, and

$$\varepsilon^f = a \cdot e^0 = a \qquad (6)$$

Thus, based on equation (6), after determining coefficient $a$, which characterizes given material in given temperature, it is possible to determine limit failure strain $\varepsilon^f$ for individual stress triaxiality coefficients $\eta$, which represent individual states of stress in given temperature.

For the state of pure torsion, equation (4) has the following form:

$$\varepsilon^f = \frac{1}{\sqrt{3}} \cdot \gamma_{12} \qquad (7)$$

Therefore, if the value of angle of shear $\gamma_{12}$ is known, it is possible to determine coefficient $a$ and use it in order to determine limit failure strain $\varepsilon^f$ for individual stress triaxiality coefficients $\eta$, which represent individual stress states at given temperature, according to equation (6).

According to the invention, the method for determining deformation causing failure of a ductile structural material subjected to various stress states and temperatures, using an assembly of an instrument and a specimen, in which a specimen of given material is twisted in a predetermined temperature, comprising the following steps:

producing a specimen of a material to be tested; the specimen having an axis of symmetry and comprising a measured part and opposite end parts and providing with a linear marker parallel to the specimen's axis of symmetry on a surface of the measured part,

placing the specimen in the instrument with one end part of the specimen secured immovable relative to the instrument and the other, opposite end part of the specimen, mounted in a rotatable manner with the possibility of applying torque that induces twisting of the measured portion of the specimen, and fixing the instrument with the specimen with external retaining means,

bringing the specimen to a predetermined test temperature;

inducing a state of pure shear in the specimen by twisting it, when the predetermined temperature has been obtained and until fracture,

measuring the angle of twist $\varphi$ of the specimen's measured portion corresponding to the specimen's fracture plane, in relation to displacement of the specimen's linear marker in the fracture plane and referring to the initial state before torsional strain,

determining the value of angle of shear $\gamma_{12}$ based on the angle of twist $\varphi$ of the specimen's measured portion,

determining the value of coefficient $a$ based on the value of angle of shear $\gamma_{12}$, according to the equation:

$$\varepsilon^f = \frac{1}{\sqrt{3}} \cdot \gamma_{12} = a$$

determining the value of limit failure strain $\varepsilon^f$, corresponding to failure of the tested material in various stress states and at given temperature at which the specimen was subjected to twisting strain based on the equation:

$$\varepsilon^f = ae^{-\frac{3}{2}\eta}$$

where $\eta$ is stress triaxiality coefficient.

Preferably, the twisting is performed by applying torque to one end part of the specimen in the plane perpendicular to the axis of symmetry of the specimen, with the other end part of the specimen being immovably held .

The specimen is brought to a predetermined test temperature by heating it by means of at least one induction coil surrounding the measured portion of the specimen placed in the instrument or by placing the instrument with the specimen in a furnace.

In an alternative embodiment the specimen is brought to a predetermined test temperature by cooling the specimen secured in an instrument in a cooling device.

The method according to the present invention, as compared to the methods known from the prior art, does not require the use of any expensive specialized testing machines, which often have large dimensions and require specialized machine operators. The instrument according to the invention is characterized by small compact and simple structure and it can be intuitively and easily used, which makes it possible to reduce the risk of human error in the course of a test.

The method according to the present invention is also characterized by low costs of calibrating the failure criterion and make it possible to determine this criterion for both positive and negative temperatures.

Moreover, considering the test characteristics, the exact value of applied torque is not essential; it only has to be high enough to cause fracture of the specimen. Therefore, it is not necessary to use specialized means for monitoring the value of applied torque, which facilities and simplifies the entire procedure.

Moreover, due to the fact that the method of present invention uses pure twisting, which is assisted by a specific shape of the instrument, constant stress state is maintained in a specimen throughout the duration of the test, which makes it possible to determine the value of coefficient $a$ which is not contrary to the present state of the art an which reflects in the most accurate way the real value for given material in given temperature.

According to the method of the present invention, it is not necessary to maintain approximately constant stress distribution in the radial direction of the specimen. Thus, it is not necessary to use thin-walled specimens and solid specimens may be used which are basically cheaper and their production is easier.

**Brief Description of Figures**

The subject matter of the invention is presented in the embodiments in the drawings, wherein:

Fig. 1 shows a side view of a specimen used in the instruments according to the invention,

Fig. 2 shows schematically a method for determining torsion angle $\varphi$ in the measured part of a specimen which angle corresponds to the specimen's fracture plane.

Fig. 3 shows an embodiment of the assembly for determining deformation causing failure of a ductile structural material in various stress states and temperatures, comprising the instrument and specimen of fig. 1, a side view and partial cross-section thereof,

Fig. 4a, 4b show another embodiment of the assembly according to the invention comprising the instrument and specimen of Fig. 1, a side view and partial cross-section, and a view from one end,

Fig. 5 show a view of the measured part of the specimen after torsional fracture indicating displacement of the linear marker.

**Description of Embodiments**

As discussed above, in order to determine deformation causing failure of ductile structural material subjected to various stress states, it is necessary to determine the value of coefficient $a$ included in equation (5).

For this purpose, according to the invention, in a specimen made of a tested material and brought to required temperature, the state of pure shear is induced by twisting the specimen until fracture, with one end part of the specimen being retained and the other end part being affected by torque. Next, the angle of twist $\varphi$ corresponding to the fracture plane of the measured part is determined, and on the basis thereof the angle of shear $\gamma_{12}$ is determined by known methods and subsequently coefficient $a$ for given material and temperature is determined on the basis of equation (6).

Determination of coefficient $a$ makes it possible to determine the limit failure strain $\varepsilon^f$ of a ductile material at given temperature for various stress states which are characterized by coefficient $\eta$ according to equation (1).

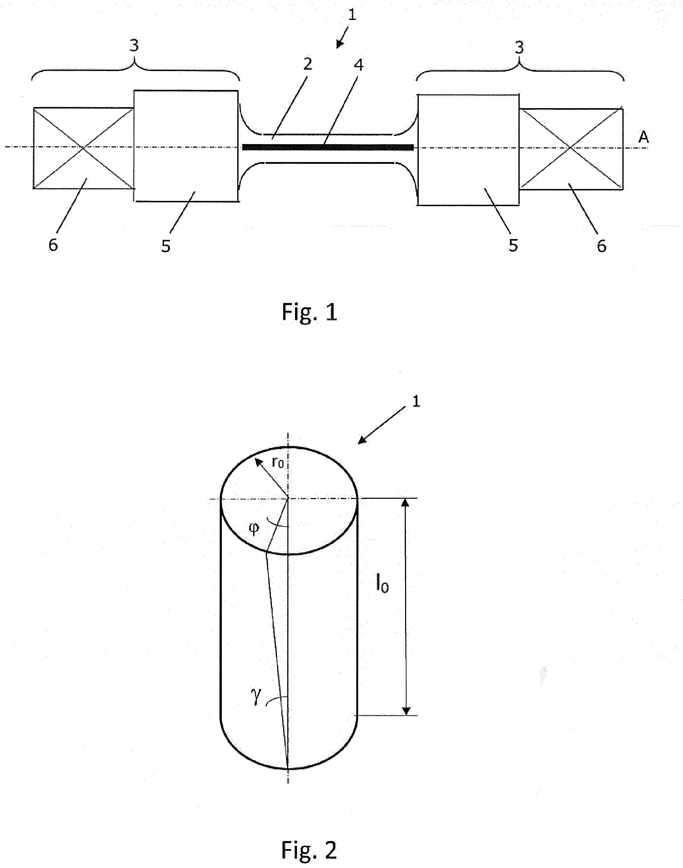

Fig. 1 shows specimen 1 used in the method for determining limit failure strain $\varepsilon^f$. Specimen 1 has an axis of symmetry A and comprises a cylindrical measured part 2 and opposite ends 3. On the surface of the measured part 2, the specimen is provided with a linear marker 4 parallel to the axis of symmetry A of the specimen 1. The linear marker 4 may be a scratch or other suitable linear mark that will remain clearly visible after specimen 1 has been heated/cooled and fractured as a result of twisting and which does not affect twisting of specimen 1.

Each of the opposite ends 3 of specimen 1, which are substantially identical, comprises an inside cylindrical section 5 which has a larger diameter than the measured part 2 and is adjacent to the measured part 2 and comprises an outside section 6 which has a square diameter, is adj acent to the cylindrical section 5 and the cross-section of which has a shorter diagonal than the diameter of the inside cylindrical section 5.

The specimen 1 prepared in such a way is brought to a predetermined test temperature by heating or cooling, i.e. to a temperature for which coefficient $a$ is to be determined and consequently - limit failure strain $\varepsilon^f$.

The specimen 1 can be heated to a predetermined test temperature by means of an induction coil 16 surrounding the measured part 2 of the specimen 1 or in a furnace.

In the case of determining limit failure strain $\varepsilon^f$ for a lower temperature than the ambient temperature, the specimen 1 is brought to a predetermined temperature in a cooling device.

When a predetermined temperature has been achieved, the specimen 1 is subjected to torsion strain until fracture of the specimen 1 by applying torque to one of the end part 3 in the plane perpendicular to the axis of symmetry of the specimen, with the opposite end part 3 of the specimen 1 being immovably retained. Preferably, said torque is applied by a pair of forces.

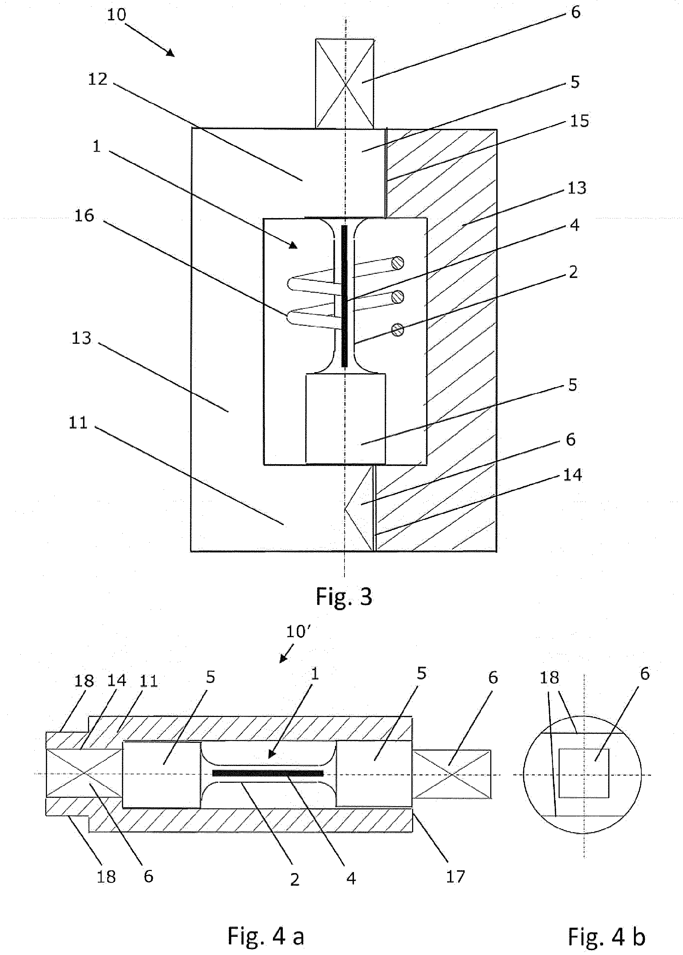

In order to fix one end of the specimen 1 and subject the specimen to twisting, preferably an instrument 10, 10' (Fig. 3, 4a, 4b) is used in which one end part 3 of the specimen 1 is retained in an immovable manner and the opposite end part 3 of the specimen 1 is mounted rotatably so that torque can be applied thereto. Prior to applying torque, the instrument 10, 10' with the specimen 1 is fixed using external retaining means, such as a vice (not show in the drawing).

After fracture of the measured part 2 of the specimen 1, measurement is carried out, using, for example, a microscope, of the angle of twist φ of the measured part 2 of the specimen 1 which corresponds to the fracture plane of the specimen 1 relative to displacement of the specimen's marker 4 in that plane with respect to the initial state before torsional strain. The angle of twist φ of the measured part 2 of the specimen 1 corresponding to the facture plane of the specimen 1 is schematically shown in Fig. 2.

Based on the angle of twist φ of the measured part 2 of the specimen 1, the value of shear strain angle $\gamma_{12}$, is determined, according to known methods, which is used to determine the value of coefficient $a$ in equations (7) and (6).

Determination of coefficient $a$ makes it possible to determine, on the basis of equation (5), the values of limits failure strain $\varepsilon^f$ causing failure of the tested material in various stress states and temperatures.

In order to carry out the above described method for determining the values of equivalent limits failure strain $\varepsilon^f$, according to the invention, there is provided an assembly of the instrument 10, 10' and the specimen 1, as shown in the embodiments in Figures 3, 4a, 4b. The specimen 1 is described below.

In the first embodiment in Fig. 3, the instrument 10 is in the frame-like shape holding the specimen 1 in a non-tilted position and it comprises two opposite bases 11, 12 connected with side arms 13. In one base 11, a through-hole 14 is made which has a square cross-section. The side length of said square through-hole 14 ensures that the outside section 6 of the specimen's end part 3, which has a square cross-section, can be easily placed therein, without the possibility of rotation, and prevents the inside cylindrical section 5 of the specimen's end part 3 from entering the square through-hole 14.

In the base 12, which is opposite to the base 11 with the square through-hole 14, a through-hole 15 is shaped which has a round cross-section and a diameter which allows the outside section 6 with square cross-section of the specimen's end part 3 to easily go through it and the cylindrical inside section 5 of the specimen's end part 3 to be placed therein with the possibility of rotation; wherein the outside section 6 having square cross section of the specimen's end part 3 protrudes at least partially outside the round through-hole 15 of the instrument's base 12.

In order to heat the specimen 1, the assembly may comprise at least one induction coil 16 which surrounds the measured part 2 of the specimen 1. Test temperature is determined by means of known methods, preferably using at least one thermocouple (not show in the drawing) which is in contact with the measured part 2 of the specimen 1. The use of suitable wiring of at least one induction coil 16 and connection it with at least one thermocouple, preferably with feedback, makes it possible to obtain a uniform temperature along the entire length of the measured part of the specimen.

The instrument 10 is configured for being immovably held by means of external retaining means, for example, by a vice, and ensures stable support for the specimen 1 while the method for determining values of limit failure strain $\varepsilon^f$ is carried out. The use of at least one induction coil 16 for heating the specimen 1 makes it possible to heat the specimen 1 in the tool 10 without the necessity of placing it in a furnace. When the specimen 1 has been heated and the instrument 10 with the specimen 1 has been placed in a vice, the specimen 1 is twisted by means of a tool, e.g. wrench, which is placed on the protruding outside section 6, with square cross-section, of the end part 3 of the specimen 1, until fracture of the measured part 2.

In the second embodiment of the assembly, show in Figures 4a, 4b, wherein identical elements are marked with the same reference numbers as those in the first embodiment, the instrument 10' is in the shape of a cylinder that holds the specimen 1 inside in a non-tilted position relative to the axis and comprises one base 11 with a through-hole 14 with a square cross-section and an opposite open end 17.

Like in the first embodiment, the side length of the square through-hole 14 of the base 11 of the instrument 10' ensures that the outside section 6 the specimen's (1) end part (3) which has a square cross-section, can be easily place therein, in an non-rotatable manner and prevents the cylindrical inside section 5 of the specimen's 1 end part 3 from entering the square through-hole 14.

The inside diameter of the instrument 10' is selected to ensure that cylindrical section 5 of the specimen's 1 end part 3 can rotate therein, whereas the length of the inside cylindrical surface of the instrument 10', from the base 11 to the open end 17 is selected such that the outside section , which has a square cross-section, of the specimen's end part 3 projects at least partially beyond the open end 17 of the instrument 10'.

The outside cylindrical surface of the instrument 10' has flattened portions 18 on the opposite sides relative to its diameter, for mounting the instrument 10' in the external retaining means, for example, in a vice. When the instrument 10' with the specimen 1 has been placed in the vice, the specimen 1 is twisted by means of a tool, e.g. wrench, placed on the protruding outside section 6 of the end part 3 of the specimen 1.

The assembly of the instrument 10' and the specimen 1 according to the second embodiment of the invention is used for heating the specimen 1 in a furnace or cooling it in a cooling device. The specimen 1 is placed in the instrument 10' and the entire assembly is heated or cooled to a predetermined temperature. When the predetermined temperature has been achieved, the instrument 10' with the specimen 1 is retained, e.g. in a vice, and the specimen is twisted, e.g. by means of a wrench, placed on the protruding outside section 6 of the end part 3 of the specimen, which has a square cross-section, until fracture of the measured part 2 of the specimen 1.

The shape of the instrument 10' ensures that the measured part 2 of the specimen 1 is provided with better thermal insulation against the ambient environment than the remaining parts of the specimen 1, and thus the measured part 2 of the specimen 1 maintains the temperature acquired in a furnace or a cooling device for a longer time.

### Example

Specimen 1, such as the specimen described in relation to Fig. 2, was tested in room temperature (20°C); the specimen was placed in an instrument 10, such as the instrument described in relation to Fig. 3.

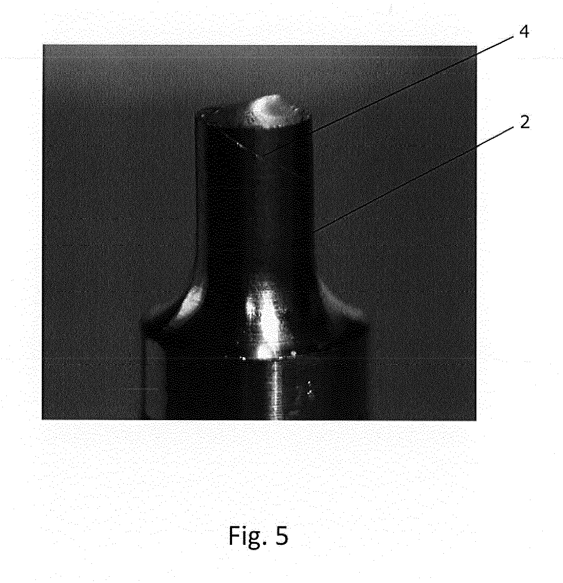

Prior to being deformed, the measured part 1 was measured up by means of a measuring microscope. The initial radius of the measured part 2 of the specimen 1 was ro = 3,1986 mm and it was assumed that it was not subject to any change under pure shear. Instrument 10 with the specimen 1 was secured in a vice and torque was applied to the protruding outside section 6 of the end part 3 of the specimen, and thus the measured part 2 of the specimen 1 was brought to fracture in the plane located at a distance *lo*= 26,0392 mm from the plane of the end of the fixing area of the opposite end part 3 of the specimen 1. The specimen in the state after fracture is shown in Fig. 5.

Displacement of the linear marker 4 located on the surface of the measured part 2 of the specimen 1 showed that the fracture of the specimen 1 occurred after almost two turns made in the fracture plane.

The angle of twist $\varphi$ in the fracture plane of the specimen 1 was measured by the measuring microscope and its radian measure, corresponding to the value of angle of shear, was 8.792 rad (506,36°) (according to Fig. 2).

Based on the known equation:

$$\gamma_{12} = \varphi \frac{ro}{lo}$$

angle of shear $\gamma_{12}$ was determined, which amounted to 1.08 rad. On the basis of this result, limit failure strain $\varepsilon^f$ was determined in accordance with equation (8):

$$\varepsilon^f = 0.622$$

This value, in accordance with equation (6) according to the invention, corresponds to the constant value *a* in the equation (5) describing the dependence between the limit failure strain $\varepsilon^f$ and the stress triaxiality coefficient $\eta$ for given test temperature.

Based on the determined constant value *a*, values of the limit failure strain $\varepsilon^f$ for various stress states were determined:

For uniaxial tensile test, wherein $\eta$=1/3

$$\varepsilon^f = 0.622e^{-\frac{3}{2}\eta} = 0.622e^{-\frac{1}{2}} = 0.377$$

For uniaxial compression test, wherein $\eta$= -1/3

$$\varepsilon^f = 0.622e^{-\frac{3}{2}\eta} = 0.622e^{\frac{1}{2}} = 1.025$$

Analogically, the value of limit failure strain $\varepsilon^f$ may be calculated for other stress states and given temperature, which in this case was the room (20°C) temperature.

Therefore, the material destruction criterion defined in the above way may be implemented and successfully applied for strength calculations in contemporary engineering structures carried out with the use of computer software using e.g. the Finite Element Method (FEM), in particular in automotive and aviation industry.

### Claims

1.   A method for determining deformation causing failure of a ductile structural material subjected to various stress states and temperatures, using an assembly of an instrument and a specimen, in which a specimen of given material is subjected to twisting in a predetermined temperature, and further comprising the following steps:

producing a specimen of a material to be tested; the specimen having an axis of symmetry and comprising a measuring part and opposite end parts and provided with a linear marker parallel to the specimen's axis of symmetry on a surface of the measuring part;

placing the specimen in the instrument with one end part of the specimen secured immovable relative to the instrument and the other, opposite end part of the specimen, mounted in a rotatable manner and applying torque that induces twisting of the measured portion of the specimen, and fixing the instrument with the specimen with external retaining means;

bringing the specimen to a predetermined test temperature;

inducing in the specimen a state of pure shear by twisting it, when the predetermined temperature has been obtained and until fracture;

measuring the angle of twist $\varphi$ of the specimen's measuring portion corresponding to the specimen's fracture plane, in relation to displacement of the specimen's linear marker in the fracture plane and referring to the initial state before torsional deformation,

determining the value of angle of shear $\gamma_{12}$ based on the angle of twist $\varphi$ of the specimen's measuring portion, determining the value of coefficient $a$ based on the value of angle of shear $\gamma_{12}$, according to the equation:

$$\frac{1}{\sqrt{3}} \cdot \gamma_{12} = a$$

determining the value of limit failure strain $\varepsilon^f$, corresponding to failure of the tested material in various stress states and at given temperature at which the specimen was subjected to twisting strain based on the equation:

$$\varepsilon^f = ae^{-\frac{3}{2}\eta}$$

where $\eta$ is stress triaxiality coefficient.

2. The method according to claim 1, **characterized in that** the twisting is performed by applying torque to one end part of the specimen in the plane perpendicular to the axis of symmetry of the specimen, with the other end part of the specimen being immovably held .

3. The method according to claim 1 or 2, **characterized in that** the specimen is brought to a predetermined test temperature by heating it by means of at least one induction coil surrounding the measuring portion of the specimen placed in the instrument.

4. The method according to claim 1 or 2, **characterized in that** the specimen is brought to a predetermined test temperature by heating the specimen placed in the instrument in a furnace.

5. The method according to claim 1 or 2, **characterized in that** the specimen is brought to a predetermined test temperature by cooling the specimen secured in an instrument in a cooling device.

**Patentansprüche**

1. Verfahren zum Bestimmen der Verformung, die einen Ausfall von duktilem Strukturmaterial verursacht, das verschiedenen Belastungszuständen und Temperaturen ausgesetzt ist, unter Verwendung einer Anordnung, die eine Vorrichtung und eine Probe umfasst, wobei die Probe aus einem gegebenen Material einer Verdrehung bei einer vordefinierten Temperatur ausgesetzt wird, und das Verfahren ferner die folgenden Schritte umfasst:

Herstellen einer Probe des zu testenden Materials, wobei die Probe eine Symmetrieachse aufweist und die Probe den Messabschnitt und gegenüberliegende Endabschnitte umfasst, und mit einer linearen Markierung parallel zur Symmetrieachse der Probe auf der Oberfläche des Messabschnitts versehen ist;

Einlegen der Probe in die Vorrichtung, wobei ein Endabschnitt der Probe in Bezug auf die Vorrichtung an Ort und Stelle befestigt ist und ein anderer, gegenüberliegender Endabschnitt der Probe drehbar befestigt ist und ein Drehmoment anwendet, das ein Verdrehen des Messteils der Probe und ein Montieren der Vorrichtung mit der Probe mit externen Haltemitteln verursacht;

Bringen der Probe auf die vordefinierte Prüftemperatur;

Induzieren einer reinen Scherung in der Probe durch Verdrehen bei Erreichen einer vordefinierten Temperatur und zum Bruch;

Messung des Verdrehungswinkels $\phi$ des Messteils der Probe entsprechend der Bruchebene der Probe in Abhängigkeit von der Verschiebung der linearen Markierung der Probe in der Bruchebene und bezogen auf den Ausgangszustand vor Torsionsverformung,

Bestimmung des Wertes des Scherwinkels $\gamma_{12}$ anhand des Verdrehungswinkels $\phi$ des Messteils der Probe,

Bestimmung des Werts des Koeffizienten $a$ basierend auf dem Wert des Scherwinkels $\gamma_{12}$ gemäß der Gleichung:

$$\varepsilon^f = \frac{1}{\sqrt{3}} \cdot \gamma_{12} = a$$

Bestimmung des Wertes der Grenzbelastung $\varepsilon^f$ entsprechend dem Ausfall des geprüften Materials unter verschiedenen Belastungszuständen und bei einer gegebenen Temperatur, bei der die Probe einer Torsionsbelastung ausgesetzt wurde, basierend auf der Gleichung:

$$\varepsilon^f = a e^{-\frac{3}{2}\eta}$$

wobei $\eta$ der dreiachsige Lastfaktor ist.

2. Verfahren nach Anspruch 1, **dadurch gekennzeichnet, dass** das Verdrehen durchgeführt wird, indem ein Drehmoment auf einen Endabschnitt der Probe in einer Ebene senkrecht zur Symmetrieachse der Probe aufgebracht wird, während der andere Endabschnitt stationär gehalten wird.

3. Verfahren nach Anspruch 1 oder 2, **dadurch gekennzeichnet, dass** die Probe auf eine vorbestimmte Prüftemperatur gebracht wird, indem sie mittels mindestens einer Induktionsspule erhitzt wird, die einen Messabschnitt der in der Vorrichtung angeordneten Probe umgibt.

4. Verfahren nach Anspruch 1 oder 2, **dadurch gekennzeichnet, dass** die Probe auf die vorbestimmte Prüftemperatur gebracht wird, indem die in der Vorrichtung angeordnete Probe in einem Ofen erhitzt wird.

5. Verfahren nach Anspruch 1 oder 2, **dadurch gekennzeichnet, dass** die Probe auf eine vorbestimmte Prüftemperatur gebracht wird, indem die in der Vorrichtung befestigte Probe in einer Kühlvorrichtung gekühlt wird.

**Revendications**

1. Procédé de détermination de la déformation provoquant la défaillance d'un matériau structurel ductile soumis à différents états de contrainte et diverses températures, utilisant un ensemble consistant en l'appareil et l'échantillon dans lequel l'échantillon d'un matériau donné est soumis à une torsion à une température prédéfinie, le procédé comprenant en outre les étapes suivantes :

Préparation de l'échantillon du matériau à tester, l'échantillon ayant un axe de symétrie et comprenant la portion de mesure et des portions d'extrémité opposées,
et muni de la marque linéaire parallèle à l'axe de symétrie de l'échantillon sur la surface de la portion de mesure ;
Mise de l'échantillon dans l'appareil avec une partie d'extrémité de l'échantillon fixée en place par rapport à l'appareil et une autre partie d'extrémité opposée de l'échantillon, fixée de manière rotative et appliquant un couple de résistance, ce qui provoque la torsion de la partie de mesure de l'échantillon, et la fixation de l'appareil avec l'échantillon à l'aide des moyens de retenue externes ;
Amenée de l'échantillon à la température de test prédéfinie ;
Induction d'un cisaillement pur dans l'échantillon en le tordant lorsqu'une température prédéfinie a été atteinte et en le fracturant ;
Mesure de l'angle de torsion $\phi$ de la partie de mesure de l'échantillon correspondant au plan de rupture de l'échantillon, en fonction du déplacement de la marque linéaire de l'échantillon dans le plan de rupture et par rapport à l'état initial avant déformation en torsion,
Détermination de la valeur de l'angle de cisaillement $\gamma_{12}$ à partir de l'angle de torsion $\phi$ de la partie de mesure de l'échantillon,

Détermination de la valeur du coefficient *a* à partir de la valeur de l'angle de cisaillement $\gamma_{12}$ selon l'équation :

$$\varepsilon^f = \frac{1}{\sqrt{3}} \cdot \gamma_{12} = a$$

Détermination de la valeur de la charge limite de la défaillance $\varepsilon^f$ correspondant à la rupture du matériau testé dans différents états de la charge et à une température donnée à laquelle l'échantillon a été soumis à une charge de torsion, basée sur l'équation :

$$\varepsilon^f = a e^{-\frac{3}{2}\eta}$$

où $\eta$ est le facteur triaxial de charge.

2. Procédé selon la revendication 1, **caractérisé en ce que** la torsion est effectuée en appliquant un couple de résistance à une partie d'extrémité de l'échantillon dans un plan perpendiculaire à l'axe de symétrie de l'échantillon, avec l'autre partie d'extrémité maintenue fixe.

3. Procédé selon la revendication 1 ou 2, **caractérisé en ce que** l'échantillon est amené à la température de test prédéfinie en le chauffant au moyen d'au moins une bobine d'induction entourant une portion de mesure de l'échantillon placé dans l'appareil.

4. Procédé selon la revendication 1 ou 2, **caractérisé en ce que** l'échantillon est amené à la température de test prédéfinie en chauffant l'échantillon placé dans l'appareil dans une étuve.

5. Procédé selon la revendication 1 ou 2, **caractérisé en ce que** l'échantillon est amené à une température de test prédéfinie en refroidissant l'échantillon fixé dans l'appareil dans un dispositif de refroidissement.

**Fig. 1**

**Fig. 2**

Fig. 3

Fig. 4 a                    Fig. 4 b

Fig. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000234991 A

**Non-patent literature cited in the description**

- **HANCOCK J. W. ; MACKENZIE A. C.** On the mechanism of ductile failure in high-strength steels subjected to multi-axial stress states. *J. Mech. Phys. Sol.,* 1976, 147-175
- **WIERZBICKI T ; BAO Y. ; LEE Y. W. ; BAI Y.** Calibration and evaluation of seven fracture models. *International Journal of Mechanical Sciences,* 2005, vol. 47, 719-743
- **FALESKOG JONAS et al.** Tension-torsion fracture experiments-Part I: Experiments and a procedure to evaluate the equivalent plastic strain. *INTERNATIONAL JOURNAL OF SOLIDS AND STRUCTURES, NEW YORK, NY, US,* 04 September 2013, vol. 50 (25), ISBN 0020-7683, 4241-4257